(19) **Europäisches Patentamt**
**European Patent Office**
**Office européen des brevets**

(11) **EP 3 917 283 A1**

(12) **EUROPEAN PATENT APPLICATION**
published in accordance with Art. 153(4) EPC

(43) Date of publication:
01.12.2021 Bulletin 2021/48

(51) Int Cl.:
*H05B 6/64* (2006.01)

(21) Application number: 19911042.0

(22) Date of filing: 27.05.2019

(86) International application number:
**PCT/CN2019/088566**

(87) International publication number:
**WO 2020/151146 (30.07.2020 Gazette 2020/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 22.01.2019 CN 201920107215 U

(71) Applicants:
• **Jiangnan University**
**Wuxi, Jiangsu 214122 (CN)**
• **Nanjing Xianou Instruments Manufacture Co., Ltd**
**Nanjing, Jiangsu 210038 (CN)**

(72) Inventors:
• **FAN, Daming**
**Wuxi, Jiangsu 214122 (CN)**

• **GAO, Wenhua**
**Wuxi, Jiangsu 214122 (CN)**
• **YANG, Huayu**
**Wuxi, Jiangsu 214122 (CN)**
• **ZHANG, Hao**
**Wuxi, Jiangsu 214122 (CN)**
• **YAN, Bowen**
**Wuxi, Jiangsu 214122 (CN)**
• **ZHANG, Yuhao**
**Wuxi, Jiangsu 214122 (CN)**
• **ZHAO, Jianxin**
**Wuxi, Jiangsu 214122 (CN)**
• **CHEN, Wei**
**Wuxi, Jiangsu 214122 (CN)**

(74) Representative: **Ipside**
**7-9 Allées Haussmann**
**33300 Bordeaux Cedex (FR)**

(54) **MICROWAVE TREATMENT DEVICE FOR CONTINUOUS LIQUID STATE MATERIAL**

(57) The present invention discloses a microwave treatment device for a continuous liquid state material, which belongs to the technical field of microwave treatment. The microwave treatment device for a continuous liquid state material of the present invention includes a feeding and preheating section, a microwave heating section, and a cooling and receiving section. The microwave heating section includes a microwave generation system, a waveguide system as well as a tuner, and a microwave absorption cavity. The waveguide system includes at least two waveguides. Each waveguide is mounted at a microwave feed port provided on an outer wall of the microwave absorption cavity according to a predetermined angle. The predetermined angle is greater than or equal to 15° and less than 90°. The present invention provides a specific implementation solution for microwave treatment of a liquid state material, and considers a reflection action of the microwaves, the safety of device operation process and a utilization rate of energy are improved by means of a special waveguide arrangement mode, and the treatment temperature for the liquid state material can be reached. Therefore, a feasible solution for applying the microwave treatment to the liquid state material is provided.

Fig. 1

Printed by Jouve, 75001 PARIS (FR)

## Description

## Technical Field

The present invention relates to a microwave treatment device for a continuous liquid state material, which belongs to the technique field of microwave treatment.

## Background of the Invention

Microwaves refer to electromagnetic waves in a frequency range of 300 MHz to 300 GHz. The microwaves have been widely used in the technical field of modern radar and communications. In addition to the communications, the microwaves have become a new technique in the field of processing due to heat characteristics thereof on dielectric substances. During the traditional liquid state material processing and treatment process, heating is a crucial step. Traditional heating methods usually use steam as a main energy source. For example, in the process of milk pasteurization and UHT sterilization, high-pressure steam consumes a large amount of energy, has low thermal efficiency, and may bring many safety hazards. Therefore, novel energy sources replacing steam heating have attracted wide attention of scholars, among which the microwave heating technique is regarded as one of the heating techniques most promising in industrialization.

Compared with the traditional thermal heating methods, microwave heating has the following characteristics: 1. short time, fast speed, and strong selectivity; 2. radiant heating, which is not easy to cause coking due to overheating of a tube wall during the treatment process; 3. less energy consumption, small footprint, and high degree of automation; 4. low cost of equipment and accessories, and easy maintenance. Meanwhile, microwave heating has advantages in maintaining the color, aroma, taste, and nutrients of raw materials, and has no chemical residue and higher safety. Therefore, it is of great significance to pay attention to the microwave heating technique for the upgrading and optimization of the traditional processing process.

However, although the microwave heating technique has been widely used in household microwave ovens, the technique is rarely applied in industrial process of liquid state material, which is mainly limited by the existing techniques and equipment, and less research on microwave direct heating of flowing fluids. Moreover, the existing design solution of the microwave heating device for liquid state material has the following problems:

1. The matching between the microwave absorption process of the liquid state material and flow characteristics (laminar flow and turbulent flow) of the fluids.
2. The combination of the waveguides and the material cavity is only a simple connection conceptually, but lacks a specific feasible solution.

3. Different shapes of the microwave cavities result in multiple modes and poor stability of the microwaves inside a microwave reaction cavity, which cannot realize a single-mode absorption process of the flowing fluids.
4. The problems of efficiency and uniformity of microwave heating are not considered, an energy utilization rate is low, and it is difficult to reach the processing temperature required by the liquid state material.
5. The reflection problem of electromagnetic waves in the cavity is not considered, so that there are many safety hazards exist.
6. There is no microwave combined equipment for the direct heating process of the liquid state material, and for different types of liquid state materials, there is no consideration for rationality of materials.

## Summary of the Invention

In order to solve the problems above that currently exist, and considering the following requirements that microwave heating for the liquid state material needs to satisfy: 1. a fluid is needs to be heated to a required treatment temperature within a certain time, and the temperature needs to be maintained for a certain period of time; 2. the installation mode of the magnetron should be rational, and it is necessary to avoid the damage of reflection of electromagnetic waves to the magnetron while providing a sufficient power; 3. the complex electromagnetic field distribution needs to be solved, the cold points in a device need to reduced or eliminated to make the heating uniform; 4. the microwave heating process should be stable, and the microwave heating mode needs to match a liquid flowing process; and 5. the microwave combined equipment system is suitable for heating the liquid state material, the present invention provides a microwave treatment device for a continuous liquid state material.

The microwave treatment device for a continuous liquid state material includes: a feeding and preheating section, a microwave heating section, and a cooling and receiving section; and the sections are sequentially connected.

The microwave heating section includes a microwave generation system, a waveguide system as well as a tuner, and a microwave absorption cavity. The waveguide system includes at least two waveguides. Each waveguide is mounted at a microwave feed port provided on a outer wall of the microwave absorption cavity according to a predetermined angle. The predetermined angle is greater than or equal to 15° and less than 90°.

Optionally, the tuner is provided in each waveguide, and the reflection coefficient during microwave transmission approaches 0 by adjusting an orientation and an insertion depth of the tune. The reflection

$$\text{The reflection coefficient} = \frac{\text{reflected voltage}}{\text{incident voltage}}.$$

Optionally, the tuner adopts a single-stub tuner; a network analyzer may be used to measure an input return loss S11 parameter during mounting; and by adjusting an orientation and insertion depth of the tuner, the S11 parameter < -10dB, and meanwhile, a voltage standing wave ratio approaches 1.

The S11 parameter= 20 lg(reflection coefficient), and

$$\text{the voltage standing wave ratio} = \frac{1 + \text{reflection coefficient}}{1 - \text{reflection coefficient}}.$$

Optionally, the predetermined angle ranges from 30° to 60°.

Optionally, the inclination directions of the waveguides with respect to a wall surface of the microwave absorption cavity are consistent or partially consistent.

The inclination directions of the waveguides with respect to the wall surface of the microwave absorption cavity are adjusted to be consistent or partially consistent so that a heating rate of the material meets the predetermined requirements.

Optionally, a carrying pipeline is further provided inside the microwave absorption cavity.

Optionally, the carrying pipeline is a circular pipeline.

Optionally, an outer diameter of the carrying pipeline is the same as an inner distance of short edges of the microwave absorption cavity.

Optionally, a rapid heating device is provided at an inlet of the carrying pipeline; the rapid heating device is used to rapidly heat a material when entering the carrying pipeline to meet set heating rate requirements.

Optionally, a wave absorbing material is provided outside the inlet of the carrying pipeline, and the wave absorbing material is used to rapidly heat the material when entering the carrying pipeline to meet set heating rate requirements.

Optionally, an outer diameter of the inlet of the carrying pipeline is the same as an outer diameter of a pipeline part of the carrying pipeline not provided with the wave absorbing material.

Optionally, a sealing material is mounted at the microwave feed port; and the sealing material has a carrying capacity and microwave permeability, and is a low-loss or non-loss insulator.

Optionally, the sealing material includes quartz, polytetrafluoroethylene, polypropylene, and high-temperature resistant glass.

Optionally, the inclination direction of each waveguide with respect to the wall surface of the microwave absorption cavity faces the middle part of the microwave absorption cavity.

Optionally, the microwave absorption cavity is a rectangular cavity; microwave feed ports are provided on the opposite wall surfaces of the microwave absorption cavity at certain distances; and each waveguide is connected to the microwave absorption cavity via the microwave feed port.

Optionally, a cavity cross-section of each waveguide has a same shape and size as that of a bottom surface of the microwave absorption cavity, and the bottom surface of the microwave absorption cavity is a surface perpendicular to a material transmission direction.

Optionally, the microwave feed ports in adjacent wall surfaces of the microwave absorption cavity are in a 90-degree rotation relationship.

Optionally, the microwave feed ports on the adjacent wall surfaces of the microwave absorption cavity are arranged in a cross manner.

Optionally, the distances between the microwave feed ports on each wall surface of the microwave absorption cavity are equal.

Optionally, the microwave feed ports on four wall surfaces of the microwave absorption cavity are arranged spirally.

Optionally, the microwave generation system includes a magnetron, a cooling device, and a cast aluminum excitation cavity; one end of the magnetron is connected to the cast aluminum excitation cavity, and the other end is connected to the cooling device; and the cooling device includes an air-cooling and/or water-cooling device. The air-cooling device includes an axial fan and a fan cover for heat dissipation of the magnetron; a dust-proof plate for preventing foreign matters from entering the cast aluminum excitation cavity is provided at a joint between the cast aluminum excitation cavity and the waveguide system; and the water-cooling device contains a water-cooling container and a circulating water pipeline.

Optionally, the feeding and preheating section includes a feed tank; the material is conveyed between the feed tank and the microwave heating section by means of a screw pump; and meanwhile, a flow meter is provided in front of the microwave heating section and is configured to accurately control a flow rate of the liquid state material entering the microwave heating section. The feed tank is designed as a jacket structure that is filled with hot water having a predetermined temperature for heating the liquid state material in the feed tank to a predetermined temperature; and the liquid state material is uniformly stirred to enable various parts thereof to have a same initial temperature while improving a heating speed and a uniformity.

Optionally, the microwave treatment device for a continuous liquid state material further contains a constant temperature treatment section connected between the microwave heating section and the cooling and receiving section; the constant temperature treatment section includes a heat preservation tank, a heating device, and a coil; the heat preservation tank is in a double-layer structure; the coil is mounted inside the heat preservation tank and is configured to ensure a sufficient constant treatment time of the liquid state material while increasing a heat exchange area of the liquid state material; a drain valve is mounted at the bottom of the heat preservation tank for liquid drainage and liquid replacement; and an air outlet hole is provided on a top cover at an upper portion of the heat preservation tank for balancing internal and external air pressures.

Optionally, the cooling and receiving section includes a cooling tank, a refrigerating compressor, and a coil; the coil is mounted inside the cooling tank for ensuring a sufficient liquid cooling time while increasing the heat exchange area of the liquid state material; a drain valve is mounted at a bottom of the cooling tank; the air outlet hole is provided on the top cover at the upper portion of the cooling tank for balancing the internal and external air pressures.

Optionally, a glass tube is added at an outlet of the microwave heating section to observe a flow state of the fluid material to implement the control on the parameter; meanwhile, a receiving valve is mounted at the outlet of the microwave heating section to change a flow direction of the material to realize flexible material taking.

The beneficial effects of the present invention are as follows.

By connecting each waveguide to the wall surface of the microwave absorption cavity at a predetermined angle of larger than or equal to 15° and less than 90° , the area of an intersection interface between the waveguide and the material pipeline is adjusted rationally, and with the use of the tuner, the reflection coefficient during microwave transmission approaches 0, and the voltage standing wave ratio approaches 1, which greatly improves the safety of the microwave processing operation process. The microwave absorption cavity is the rectangular cavity, the microwave feed ports are provided on the opposite wall surfaces of the microwave absorption cavity at certain distances, and each waveguide is connected to the microwave absorption cavity via the microwave feed port, which provides a specific feasible solution for microwave treatment. In addition, the inclined direction of each waveguide relative to the wall surface of the microwave absorption cavity is consistent or partially consistent, so that the microwave energy transmitted into the microwave absorption cavity can be uniformly or intensively output. It also provides concrete and feasible solution for each plan. One solution is the microwave treatment device for a continuous liquid state material, with a material transmission pipeline included inside the microwave absorption cavity. In this solution, the liquid state materials are circulated through inside the material transmission pipeline. Another solution is the microwave treatment device for a continuous liquid state material, with no material transmission pipeline inside the microwave absorption cavity. In this solution, the sealing material is mounted at each microwave feed port on the microwave absorption cavity, and the liquid state material directly circulates from the microwave absorption cavity. Moreover, the present invention takes the high efficiency and uniformity of microwave heating into consideration, a utilization rate of energy is improved, and the problems such as pipe coking caused by some traditional heating processes using high-temperature steam as the heat source, such as the milk UHT sterilization process, are effectively solved while the treatment temperature of the liquid state material is reached.

## Brief description of the Drawings

FIG. 1 is a schematic diagram of a microwave treatment device for a continuous liquid state material provided in the present invention.
FIG.2 is a schematic structural diagram I of a microwave heating section.
FIG.3 is a schematic structural diagram II of the microwave heating section.
FIG. 4 is a schematic structural diagram of locations of materials in the two structures of a microwave heating section. FIG.4A is a schematic diagram of the location of the materials in the schematic structural diagram I of the microwave heating section. FIG. 4B is a schematic diagram of the location of the materials in the schematic structural diagram II of the microwave heating section.
FIG. 5 is a schematic structural diagram of an inlet of a carrying pipeline in the schematic structural diagram I of the microwave heating section.

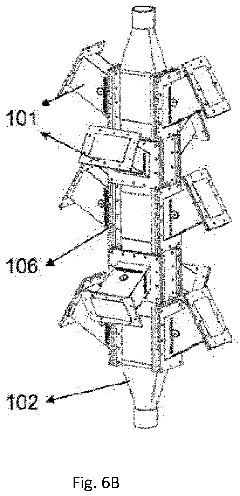

FIG. 6 is a schematic diagram of mounting structures respectively corresponding to a waveguide system and a microwave absorption cavity in the two structures of the microwave heating section. FIG. 6A corresponds to the schematic structural diagram I of the microwave heating section. FIG. 6B corresponds to the schematic structural diagram II of the microwave heating section.

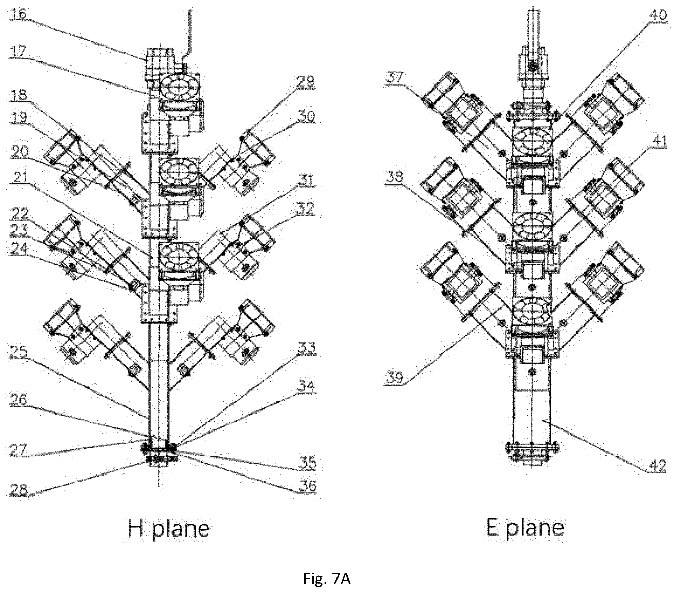

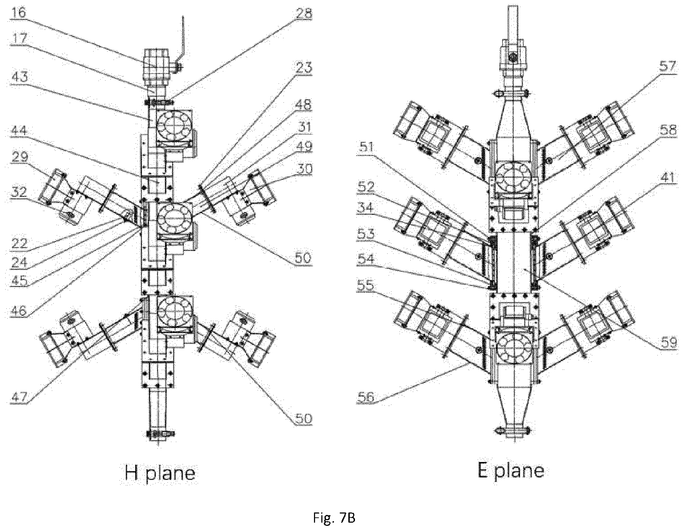

FIG. 7 is a schematic structural diagram of overall mounting of the two structures of the microwave heating section. FIG. 7A corresponds to the schematic structural diagram I of the microwave heating section. FIG. 7B corresponds to the schematic structural diagram II of the microwave heating section.

In the drawings above, 101-waveguide, 102-microwave absorption cavity, 103-carrying pipeline, 104-material, 105-wave absorbing material, and 106-quartz glass.

1-feeding and preheating section, 2-microwave heating section, 3-constant temperature treatment section, 4-cooling section, 5-feed tank, 6-heat preservation jacket, 7-stirring paddle, 8-screw pump, 9-electronic power supply, 10-flow meter, 11-electric heating pipe, 12-heat preservation tank, 13-cooling tank, 14-coil, 15-refrigerating compressor, 16-ball valve, 17-connecting pipe, 18-E-surface waveguide upper plate, 19-E-surface waveguide side plate, 20-E-surface waveguide lower plate, 21-microwave absorption cavity side plate I, 22-tuner, 23-waveguide flange, 24-tuner cover plate, 25-microwave absorption cavity A side plate II, 26-quartz material pipe, 27-wave absorbing material, 28-rapid connecting pipe, 29-axial fan, 30-fan cover, 31-cast aluminum excitation cavity, 32-magnetron, 33-microwave absorption cavity flange, 34-silicone rubber sealing O-shaped ring, 35-rapid connecting pipe flange, 36-tetrafluoro backing plate, 37-H-surface waveguide side plate, 38-H-surface waveguide lower plate, 39-H-surface waveguide upper plate, 40-microwave absorption cavity A side plate III, 41-dust-proof plate, 42-microwave absorption cavity A side plate IV, 43-square/circular transition pipe, 44-microwave absorption cavity B side plate I, 45-waveguide feed port quartz glass, 46-sealing flange, 47-microwave absorption cavity B side plate II, 48-E-surface waveguide upper plate, 49-E-surface waveguide B side plate, 50-E-surface waveguide lower plate, 51-waveguide-microwave absorption cavity fixing flange, 52-special flange fixing screw, 53-silicone rubber backing plate, 54-quartz glass frame plate, 55-H-surface waveguide B upper plate, 56-H-surface waveguide B lower plate, 57-H-surface waveguide B side plate, 58-microwave absorption cavity B side plate III, 59-microwave absorption cavity B side plate IV.

**Detailed Description of Embodiments**

In order to make the purposes, technical solutions, and advantages of the present invention clearer, the examples of the present invention will be further described in details below in combination with the drawings.

Example 1

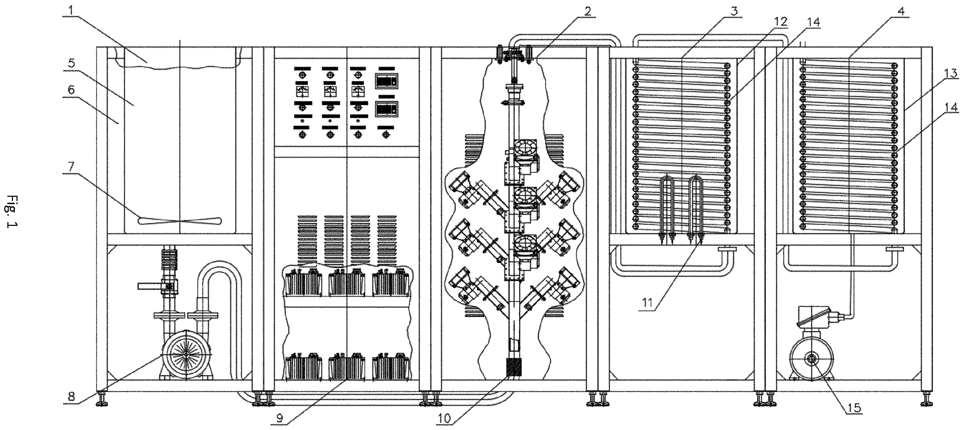

The present example provides a microwave treatment device for a continuous liquid state material. With reference to FIG. 1, the microwave treatment device for a continuous liquid state material provided by the present example may be applied to microwave treatment of fluid materials.

In FIG. 1, 1 indicates a feeding and preheating section, 2 indicates a microwave heating section, 3 indicates a constant temperature treatment section, 4 indicates a cooling section, 5 indicates a feed tank, 6 indicates a heat preservation jacket, 7 indicates a stirring paddle, 8 indicates a screw pump, 9 indicates an electronic power supply, 10 indicates a flow meter, 11 indicates an electric heating pipe, 12 indicates a heat preservation tank, 13 indicates a cooling tank, 14 indicates a coil, and 15 indicates a refrigerating compressor.

The feeding and preheating section 1 includes a feed tank 5. A material is conveyed between the feed tank 5 and the microwave heating section 2 by means of a screw pump 8. Meanwhile, a flow meter 10 is provided in front of the microwave heating section 2 and is used to accurately control a flow rate of the liquid state material entering the microwave heating section 2. The feed tank 5 is designed as a jacket structure. That is, the feed tank 5 is placed in a heat preservation jacket 6, and the heat preservation jacket 6 is filled with hot water having a predetermined temperature for heating the liquid state material in the feed tank 5 to a predetermined temperature. The liquid state material is uniformly stirred to enable various parts thereof to have a same initial temperature while improving a heating speed and a uniformity.

The microwave heating section 2 includes a microwave generation system, a waveguide system as well as a tuner, and a microwave absorption cavity.

The microwave generation system consists of a magnetron 32, a cooling device, and a cast aluminum excitation cavity 31. The type of the magnetron 32 is selected according to actual needs. One end of the magnetron is connected to the cast aluminum excitation cavity 31, and the other end is connected to the cooling device. The cooling device includes an air-cooling and/or water-cooling device. The air-cooling device consists of an axial fan 29 and a fan cover 30 for heating dissipation of the magnetron 32 during use, so as to enable the microwave generation system to maintain at a normal work state. A dust-proof plate 41 is provided at a joint between the cast aluminum excitation cavity 31 and the waveguide system, can be used for preventing foreign matters such as dust from entering the cast aluminum excitation cavity 31, and plays a role in guiding air and a certain heat dissipation effect. The water-cooling device includes a water-cooling container and a circulating water pipeline. In the present example and the following examples, the air-cooling device is used as an example for description, and therefore, the water-cooling device will not be described in detail here.

Considering that a single microwave mode can improve energy stability, in order to effectively reduce electromagnetic wave modes inside the microwave absorption cavity 102, length and width sizes of a bottom surface of the microwave absorption cavity 102 (i.e., a surface perpendicular to a material transmission direction) are designed to be the same as cavity cross-sectional length and width sizes of the used rectangular waveguide 101. Therefore, in the present example, the microwave absorption cavity 102 with a rectangular cavity is taken as an example for description, and the length and width sizes of the bottom surface of the microwave absorption cavity 102 (i.e., the surface perpendicular to the material transmission direction) are the same as the cavity cross-sectional length and width sizes of the used rectangular waveguide 101.

(It should be noted that the microwave absorption cavity 102 is also designed to be other cavities having other shapes according to actual requirements, which is not defined in the present invention.)

The waveguide system consists of a plurality of rectangular waveguides 101 arranged in a staggered manner. A microwave feed port is provided on an outer wall of the microwave absorption cavity 102. For convenience of description, adjacent wall surfaces among four wall surfaces of the microwave absorption cavity 102 are respectively marked as an E surface and an H surface. That is, the microwave absorption cavity 102 has two E surfaces and two H surfaces.

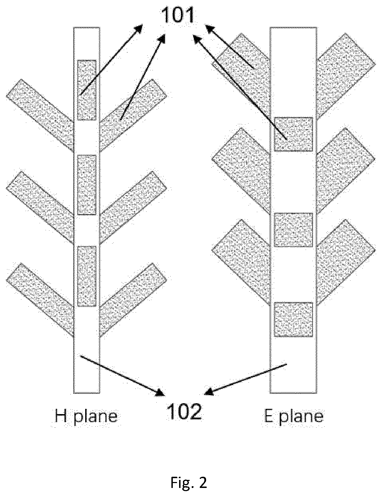

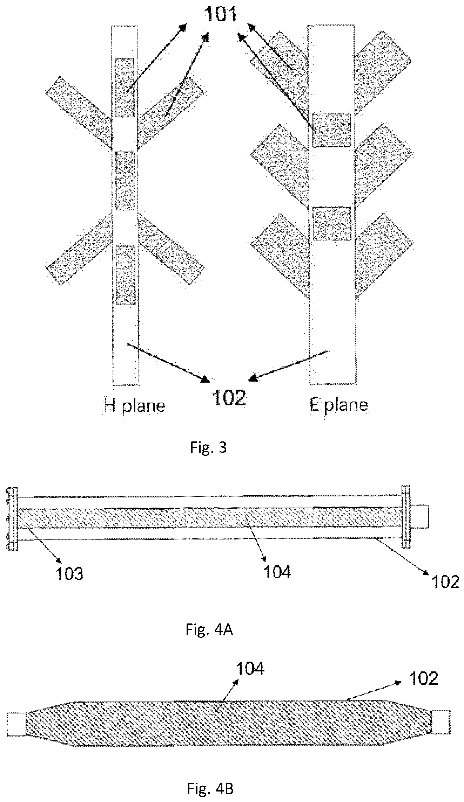

Corresponding pairs of microwave feed ports are provided on the two E surfaces at certain distances, corresponding pairs of microwave feed ports are also provided on the two H surfaces at certain distances, and a pair of microwave feed ports on the E surface is just located at an intermediate position of the microwave feed port on the H surface in a Z direction. The microwave feed ports on the E surface and the H surface have a 90-degree rotation relationship. As shown in FIG. 2 and FIG. 3, each waveguide 101 is connected to the microwave absorption cavity 102 via the corresponding microwave feed port, and each waveguide 101 is connected to the microwave absorption cavity 102 by external laser welding to ensure that inner walls of the microwave absorption cavity 102 and the waveguide 101 are smooth, to provide a guarantee for the uniform distribution of electromagnetic waves, to avoid excessive reflection of the electromagnetic waves, and to prevent the damage to the microwave generation system.

(It should be noted that the aforementioned arrangement mode of the microwave feed ports is not unique. In actual applications, various factors can be taken into consideration to determine the arrangement mode of the microwave feed ports according to actual requirements, such as a spiral-up arrangement mode.)

The aforementioned arrangement mode of the microwave feed ports enables the microwave energy to be continuously transmitted to the liquid state material, thereby reducing heating cold points in the microwave absorption cavity 102, and improving the liquid heating efficiency. Meanwhile, each rectangular waveguide 101 is connected to the feed port on the wall surface of the microwave absorption cavity 102 at a predetermined angle less than 90° and greater than 15°, which can effectively prevent the electromagnetic waves from being reflected back to the waveguide cavity or entering an opposite waveguide after being output, and can greatly improve the operation safety.

Each waveguide 101 above is provided with the tuner 22, and a reflection coefficient during microwave transmission approaches 0 by adjusting an orientation and an insertion depth of the tuner.

The reflection

The reflection coefficient $= \dfrac{reflected\ voltage}{incident\ voltage}$.

The tuner 22 may adopt a single-stub tuner. During the debugging of the continuous microwave treatment device, a network analyzer is used to measure an S11 parameter. By adjusting an orientation and insertion depth of the tuner 22 in the waveguide, S11<-10dB, and a voltage standing wave ratio approaches 1, so that microwave reflection is minimized, an microwave energy is promoted to be gathered in the microwave absorption cavity, the possibility of reflected wave penetrating the magnetron is further reduced, the magnetron is protected, the service life of the device is prolonged, the guarantee is provided for the normal and safe operation of the device, the energy utilization efficiency of the microwaves is improved, and the number of the cold points in the microwave heating section is reduced.

The S11 parameter=20 lg (reflection coefficient), and the voltage standing wave

$$ratio = \dfrac{1+reflection\ coefficient}{1-reflection\ coefficient}.$$

In actual applications, a size of the aforementioned tuner 22 ranges from 10-30 mm, and an insertion depth ranges from 10-60 mm. The ranges of adjustable front-back and the insertion depths of the tuner 22 are both at a quarter wavelength or above. The tuner 22 may be made of metal materials such as stainless steel.

In actual applications, a quartz glass tube is added at an outlet of the microwave heating section 2 to observe a flow state of the fluid materials and to facilitate the control on the parameters. Meanwhile, a receiving valve is mounted at the outlet of the microwave heating section 2. A flow direction of the materials can be changed by changing the connection condition of the receiving valve so as to implement flexible material taking.

The constant temperature treatment section 3 consists of a heat preservation tank 12, an electric heating device, and a coil 14. The heat preservation tank 12 is of a double-layer structure, which plays a better heat preservation role, and avoids safety hazards caused by excessive temperature. The coil 14 is mounted inside the heat preservation tank 12 to ensure sufficient liquid constant temperature treatment time while increasing a heat exchange area of the liquid, so that the liquid meets required sterilization requirements. The electric heating device is a stainless-steel electric heating pipe 11, a power and a number are selected according to actual situations. A drain valve is mounted at a bottom of the heat preservation tank 12 to facilitate liquid drainage and liquid replacement. A top cover is provided at an upper portion of the heat preservation tank 12. An air outlet hole is provided on the top cover, and is mainly used to prevent the safety problem caused by excessive steam pressure in the tank.

(It should be noted that the continuous microwave treatment device may not include the constant temperature treatment section 3. For example, if the heat treatment requirements are completed in the microwave heating section 2, or the treatment process does not require the constant temperature, the constant temperature treatment section 3 may not be included.)

The cooling and receiving section 4 consists of a cooling tank 13, a refrigerating compressor 15, and a coil 14. The coil 14 is mounted inside the cooling tank 13 to ensure sufficient liquid cooling time while increasing the heat exchange area of the liquid. Rapid cooling also helps certain processing processes (for example, during the liquid state material sterilization process, the rapid cooling helps to kill residual microorganisms in the liquid, so that the liquid further meets sterilization requirements). The refrigerating compressor 15 is selected according to a flow rate of a cooling fluid, and a drain valve is mounted at a bottom of the cooling tank 13. The top cover is provided at an upper portion of the cooling tank 13. An air outlet hole is provided on the top cover, and is mainly used to balance internal and external pressures and ensure the safe operation of the device.

The microwave heating section 2 of the microwave treatment device for a continuous liquid state material provided by the prevent invention has two different structures. For convenience of description, the two structures are respectively denoted as structure I and structure II, and are introduced respectively in Example 2 and Example 3 below.

Example 2

In the present example, a carrying pipeline is further provided inside the microwave absorption cavity, and materials are circulated through inside the carrying pipeline. The details are described below.

Referring to FIG. 4A and FIG. 4B, FIG. 4A is a schematic diagram of the location of the material corresponding to the structure I. It can be seen from FIG. 4A that the carrying pipeline 103 is further provided inside the microwave absorption cavity 102 of the microwave heating section 2 in the structure I. The materials are circulated through inside the carrying pipeline 103. The carrying pipeline 103 is made of a material having good microwave permeability and a certain carrying capacity. The material having good microwave permeability includes quartz, polytetrafluoroethylene, polypropylene, high-temperature resistant glass, and the like.

If the microwave treatment device for a continuous liquid state material is used for liquid state material sterilization, in order to meet a heating rate required by liquid sterilization, for example, the liquid sterilization which requires that the temperature of the liquid state material needs to rise by N° within a period of time, the solution of the structure I is as follows.

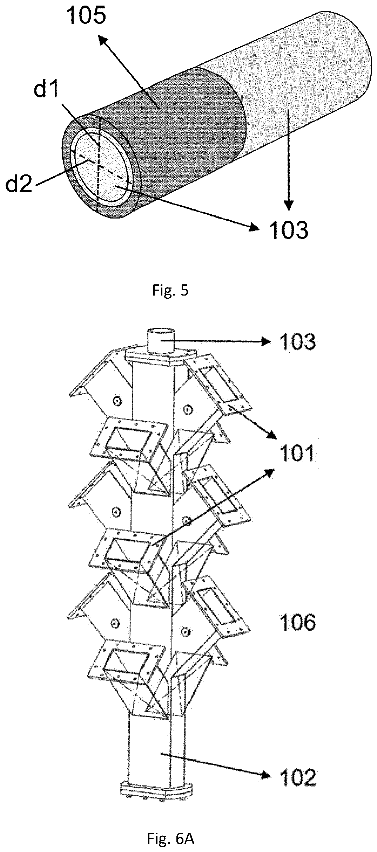

For structure I: referring to FIG. 5, a wave absorbing material is provided outside an inlet of the carrying pipeline 103, and the wave absorbing material is used to rapidly heat the materials when entering the carrying pipeline 103 to meet set heating rate requirements.

There are various implementation solutions for providing the wave absorbing material outside the inlet of the carrying pipeline 103. One of the implementation solutions is adding the wave absorbing material directly outside a section at the inlet of the carrying pipeline 103, which can be implemented by changing a wall thickness of the section at the inlet of the carrying pipeline 103 to add the wave absorbing material. For example, as shown in FIG. 5, an outer diameter d1 or an inner diameter d2 of the carrying pipeline 103 may be changed. In the present example, a constrained diameter design solution with d1 kept unchanged is adopted. Another implementation mode is implemented by changing a material of a section at the inlet of the carrying pipeline 103. For example, if the carrying pipeline 103 adopts a quartz pipeline, then when manufacturing the section at the inlet of the carrying pipeline 103, the wave absorbing material is added to the quartz to obtain a material having a wave absorbing function, and the material is used to manufacture the section at the inlet of the carrying pipeline 103.

In the constrained diameter design solution, a length of the constrained diameter may be adjusted according to the distance between the inlet of the carrying pipeline 103 and a first microwave feed port. For example, if the distance from the microwave feed port is long, the length of the constrained diameter portion may be increased accordingly, and the length of the constrained diameter should be adjusted according to actual situations and requirements. If the material needs to be heated rapidly, then the length of the constrained diameter should be appropriately increased, that is, the added wave absorbing materials are increased, so that the heat is more concentrated and is rapidly transmitted to the material. The constrained design solution facilitates the connection between the carrying pipeline 103 and an external pipeline, makes the mounting and disassembly processes easy, helps the sealing of the carrying pipeline 103, and effectively prevents microwave from leaking.

Example 3

In the present example, a carrying pipeline is not additionally provided inside the microwave absorption cavity, and the materials are directly circulated through inside the microwave absorption cavity. The details are described below.

Referring to FIG. 4A and FIG. 4B, FIG. 4B is a schematic diagram of the location of materials corresponding to the structure II. It can be seen from FIG. 4B that the materials are directly circulated through inside the microwave absorption cavity 102. Therefore, the microwave feed port on the wall surface of the microwave absorption cavity 102 of the microwave heating section 2 is sealed by using the sealing material. The sealing material has good microwave permeability and a certain carrying capacity, which includes quartz, polytetrafluoroethylene, polypropylene, high-temperature resistant glass, and the like, and may be used by stacking one or more materials.

If the microwave treatment device for a continuous liquid state material of this structure is used for liquid state material sterilization, in order to meet a heating rate required by liquid sterilization, for example, the liquid sterilization requires that the temperature of the liquid state material needs to rise by N° within a period of time, the solution of the structure II is as follows.

For the structure II, as shown in FIG. 3, since the materials are directly circulated through inside the microwave absorption cavity 102, the heating rate requirement may be met by adjusting an inclination direction of waveguides on E surfaces and/or H surfaces with respect to the wall surface of the microwave absorption cavity 102. Specifically, the waveguides on the two E surfaces may be adjusted to be toward an intermediate position of the microwave absorption cavity 102, and the inclination direction of the waveguides on the two H surfaces is kept unchanged, so as to, as shown in FIG. 3, implement centralized output of an microwave energy conveyed into the microwave absorption cavity 102 to an intermediate part thereof, so that the materials therein can be rapidly heated to meet the heating rate required by liquid sterilization.

It should be noted that the inclination direction of each waveguide in the waveguide system can be specifically adjusted according to actual requirements. For example, the inclination direction of any waveguide may be adjusted to be toward one direction, rather than limited to the waveguide on the E surface or the H surface.

When the microwave treatment device for a continuous liquid state material provided in Examples 1-3 of the present invention performs treatment on the fluid materials, and when the liquid materials flow, from bottom to top, through the microwave absorption cavity 102 or the carrying pipeline 103 therein, a lower end of the microwave absorption cavity is connected and fixed by means of a flange 33. A tetrafluoro backing plate 36 and a silicone rubber O-shaped ring 34 are added between a cavity of the microwave absorption cavity 102 or an inlet end of the carrying pipeline 103 therein and the flange 33 to ensure the tightness, and prevent microwave leakage. Meanwhile, the microwave absorption cavity 102 or the carrying pipeline 103 therein is connected to an external pipeline using a rapid connecting pipe 28, and is fixed by a rapid connecting pipe flange 35. In food industry, the external pipeline may use stainless steel 316 and 316 L.

In the present invention, the thermal effect of the microwave is mainly applied, the materials are rapidly heated in the cavity of the microwave transmission system and reaches the required treatment temperature by means of the special design in the microwave heating section. In conjunction with the constant temperature and cooling sections, the temperature and time during treatment are further ensured, and the continuous microwave heating process of the liquid state material is implemented.

The above descriptions are only preferred examples of the present invention, and are not used to define the present invention. Any modification, equivalent replacement, improvement, and the like made within the spirit and principle of the present invention all should be included in the scope of protection of the present invention.

Claims

1.   A microwave treatment device for a continuous liquid state material, **characterized by** comprising: a feeding and preheating section, a microwave heating section, and a cooling and receiving section; wherein the microwave heating section comprises a microwave generation system, a waveguide system as well as a tuner, and a microwave absorption cavity; the waveguide system comprises at least two waveguides, each waveguide is mounted at a microwave feed port provided on an outer wall of the microwave absorption cavity according to a predetermined angle, and the predetermined angle is greater than or equal to 15° and less than 90°.

2.   The microwave treatment device for a continuous liquid state material according to claim 1, **characterized in that** the tuner is provided in each waveguide, and a reflection coefficient during microwave transmission approaches 0 and a voltage standing wave ratio approaches 1 by adjusting an orientation and an insertion depth of the turner.

3.   The microwave treatment device for a continuous liquid state material according to claim 1 or 2, **characterized in that** the predetermined angle ranges from 30° to 60°.

4.   The microwave treatment device for a continuous liquid state material according to any one of claims 1 to 3, **characterized in that** inclination directions of the waveguides with respect to a wall surface of the microwave absorption cavity are consistent, partially consistent, or different.

5.   The microwave treatment device for a continuous liquid state material according to claim 4, **characterized in that** a carrying pipeline is further provided inside the microwave absorption cavity.

6.   The microwave treatment device for a continuous liquid state material according to claim 5, **characterized in that** a rapid heating device is provided at an inlet of the carrying pipeline, and the rapid heating device is configured to rapidly heat the material when entering the carrying pipeline to meet set heating rate requirements.

7.   The microwave treatment device for a continuous liquid state material according to claim 6, **characterized in that** a wave absorbing material is provided outside the inlet of the carrying pipeline, and the wave absorbing material is configured to rapidly heat the material when entering the carrying pipeline to meet set heating rate requirements.

8.   The microwave treatment device for a continuous liquid state material according to claim 7, **characterized in that** an outer diameter of the inlet of the carrying pipeline is the same as an outer diameter of a pipeline part of the carrying pipeline not provided with the wave absorbing material.

9. The microwave treatment device for a continuous liquid state material according to claim 4, **characterized in that** a sealing material is mounted at a microwave feed port, the sealing material is located between each waveguide and the micro absorption cavity, and the sealing material has a carrying capacity and a microwave permeability, and is a low-loss or non-loss insulator.

10. The microwave treatment device for a continuous liquid state material according to claim 9, **characterized in that** the inclination direction of each waveguide with respect to the wall surface of the microwave absorption cavity faces a middle part of the microwave absorption cavity.

11. The microwave treatment device for a continuous liquid state material according to any one of claims 1-10, **characterized in that** the microwave absorption cavity is a rectangular cavity; a cavity cross-section of each waveguide has a same shape and size as that of a bottom surface of the microwave absorption cavity, and the bottom surface of the microwave absorption cavity is a surface perpendicular to a material transmission direction.

12. The microwave treatment device for a continuous liquid state material according to claim 11, **characterized in that** the microwave generation system comprises a magnetron, a cooling device, and a cast aluminum excitation cavity; one end of the magnetron is connected to the cast aluminum excitation cavity, and the other end is connected to the cooling device; the cooling device comprises an air-cooling and/or water-cooling device, wherein the air-cooling device comprises an axial fan and a fan cover for heat dissipation of the magnetron; a dust-proof plate for preventing foreign matters from entering the cast aluminum excitation cavity is provided at a joint between the cast aluminum excitation cavity and the waveguide system; and the water-cooling device comprises a water-cooling container and a circulating water pipeline.

13. The microwave treatment device for a continuous liquid state material according to any one of claims 1 to 12, **characterized in that** the feeding and preheating section comprises a feed tank; the material is conveyed between the feed tank and the microwave heating section by means of a screw pump; and meanwhile, a flow meter is provided in front of the microwave heating section and is configured to accurately control a flow rate of the liquid state material entering the microwave heating section; the feed tank is designed as a jacket structure that is filled with hot water having a predetermined temperature for heating the liquid state material in the feed tank to a predetermined temperature; and the liquid state material is uniformly stirred to enable various parts thereof to have a same initial temperature while improving a heating speed and a uniformity.

14. The microwave treatment device for a continuous liquid state material according to any one of claims 1 to 13, **characterized by** further comprising a constant temperature treatment section connected between the microwave heating section and the cooling and receiving section, wherein the constant temperature treatment section comprises a heat preservation tank, a heating device, and a coil; the heat preservation tank is of a double-layer structure; the coil is mounted inside the heat preservation tank for ensuring a sufficient constant treatment time of the liquid state material while increasing a heat exchange area of the liquid state material; a drain valve is mounted at a bottom of the heat preservation tank for liquid drainage and liquid replacement; and an air outlet hole is provided on a top cover at an upper portion of the heat preservation tank for balancing internal and external air pressures.

15. The microwave treatment device for a continuous liquid state material according to any one of claims 1 to 14, **characterized in that** the cooling and receiving section comprises a cooling tank, a refrigerating compressor, and a coil; the coil is mounted inside the cooling tank for ensuring a sufficient liquid cooling time while increasing the heat exchange area of the liquid state material; the drain valve is mounted at a bottom of the cooling tank; and an air outlet hole is provided on a top cover at an upper portion of the cooling tank for balancing internal and external air pressures.

Fig. 1

Fig. 2

101

H plane 102 E plane

Fig. 3

103 104 102

Fig. 4A

104 102

Fig. 4B

105

d1

d2

103

Fig. 5

103

101

106

102

Fig. 6A

Fig. 6B

16
17
18
19
20
21
22
23
24
25
26
27
28

29
30
31
32
33
34
35
36

H plane

37
38
39

40
41

42

E plane

Fig. 7A

H plane

E plane

Fig. 7B

## INTERNATIONAL SEARCH REPORT

International application No.

**PCT/CN2019/088566**

**A.    CLASSIFICATION OF SUBJECT MATTER**

H05B 6/64(2006.01)i

According to International Patent Classification (IPC) or to both national classification and IPC

**B.    FIELDS SEARCHED**

Minimum documentation searched (classification system followed by classification symbols)

H05B

Documentation searched other than minimum documentation to the extent that such documents are included in the fields searched

Electronic data base consulted during the international search (name of data base and, where practicable, search terms used)

CNABS; DWPI; CNTXT; CNKI: 微波, 调配, 波导, 驻波比, 预热, 冷却, microwave?, tuner, waveguide, VSWR, heat+, cool+

**C.    DOCUMENTS CONSIDERED TO BE RELEVANT**

| Category* | Citation of document, with indication, where appropriate, of the relevant passages | Relevant to claim No. |
|---|---|---|
| Y | CN 1849846 A (WASHINGTON STATE UNIVERSITY) 18 October 2006 (2006-10-18) claims 1-43, and figures 1-13 | 1-4, 9-15 |
| Y | CN 201860474 U (CHINESE ACADEMY OF AGRICULTURAL MECHANIZATION SCIENCES) 08 June 2011 (2011-06-08) claims 1-10, and figures 1-5 | 1-4, 9-15 |
| Y | CN 201252654 Y (SHANGHAI HONGZE CORPORATION DEVELOPMENT CO., LTD.) 03 June 2009 (2009-06-03) claims 1-3, and figures 1 and 2 | 1-4, 9-15 |
| A | CN 106747272 A (HOU, Mengbin) 31 May 2017 (2017-05-31) entire document | 1-15 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **19 July 2019** | **30 July 2019** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/088566**

| Patent document cited in search report | | | Publication date (day/month/year) | Patent family member(s) | | | Publication date (day/month/year) |
|---|---|---|---|---|---|---|---|
| CN | 1849846 | A | 18 October 2006 | US | 2005127068 | A1 | 16 June 2005 |
| | | | | WO | 2005023013 | A2 | 17 March 2005 |
| | | | | WO | 2005023013 | A3 | 03 November 2005 |
| | | | | US | 7119313 | B2 | 10 October 2006 |
| CN | 201860474 | U | 08 June 2011 | | None | | |
| CN | 201252654 | Y | 03 June 2009 | | None | | |
| CN | 106747272 | A | 31 May 2017 | | None | | |

Form PCT/ISA/210 (patent family annex) (January 2015)